# FASCICULE DE BREVET EUROPEEN

(11) **EP 0 507 705 B1**
(45) Date de publication et mention de la délivrance du brevet: **28.09.1994**
(21) Numéro de dépôt: 92420101.5
(22) Date de dépôt: 01.04.1992
(51) Int. Cl.: F16L 55/05, A47L 15/42, D06F 39/08

(54) **Dispositif d'alimentation en liquide, avec réducteur de bruits et de coups de bélier**
Zuleitungsvorrichtung von Flüssigkeiten mit einem Geräusch- und Wasserschlagdämpfer
Liquid supply device provided with a noise and water hammer attenuator

(30) Priorité: 05.04.1991 FR 9104392
(43) Date de publication de la demande: 07.10.1992
(73) Titulaire: EATON S.A.M., MC-98000 Monaco (MC)
(72) Inventeur: Gautrois-Vilais, Michel, F-06000 Nice (FR)
(74) Mandataire: Bratel, Gérard

(56) Documents cités:
- DE-A- 3 917 016
- FR-A- 806 053
- US-A- 2 389 887

## Description

La présente invention concerne un dispositif d'alimentation en liquide, visant à réduire dans des proportions importantes les bruits dans les canalisations, ainsi que l'intensité des coups de bélier.

Plus particulièrement, cette invention se rapporte à un dispositif d'alimentation en eau, avec une vanne électromagnétique et avec un tuyau d'alimentation généralement souple, prévu pour raccorder un appareil utilisateur d'eau à un réseau d'alimentation en eau. Ainsi, le dispositif objet de l'invention est notamment destiné au remplissage en eau d'appareils électro-ménagers, tels que lave-vaisselle ou lave-linge.

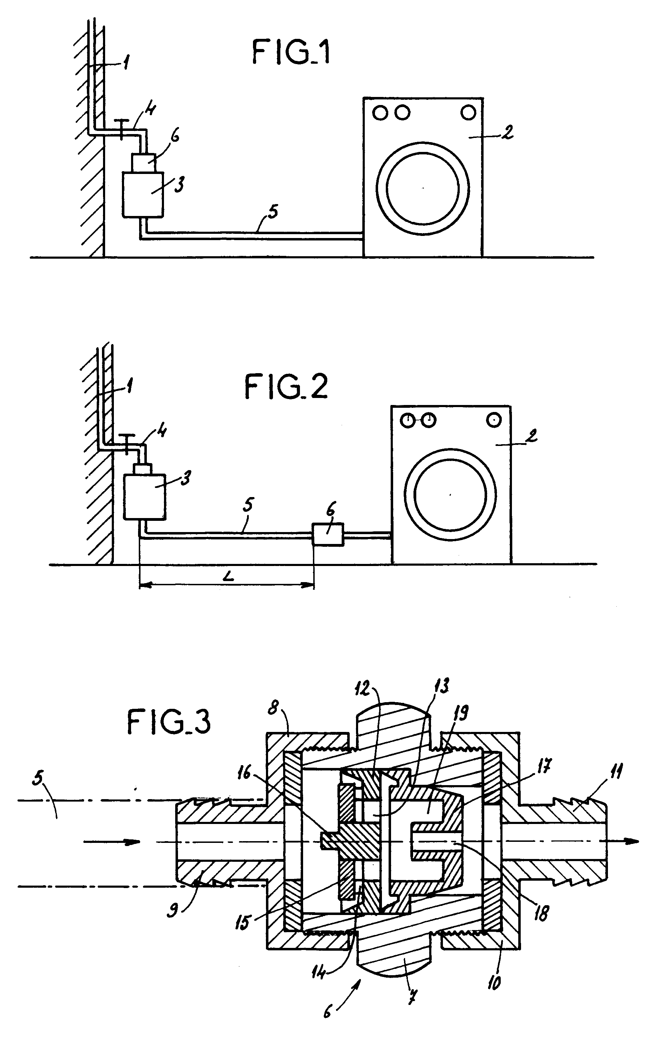

La structure actuelle de ce genre de dispositifs est illustrée, de façon très schématique, par la figure 1 du dessin annexé où le repère 1 désigne le réseau d'alimentation en eau, auquel doit être raccordé un appareil électro-ménager 2. Une vanne électromagnétique 3, ou une vanne électromagnétique de sécurité, est directement raccordée à l'arrivée d'eau 4 du réseau 1. La vanne 3 est aussi reliée, par l'intermédiaire d'un tuyau d'alimentation souple 5 d'une certaine longueur, à l'appareil électro-ménager 2. Cette vanne 3 est équipée d'un régulateur de débit 6, permettant de fixer un débit nécessaire au fonctionnement de l'appareil 2.

Avec un tel agencement, le passage de l'eau dans le régulateur de débit 6 induit un phénomène de cavitation au sein de celui-ci. Le bruit de cavitation est amplifié par les conduits d'alimentation du réseau 1 et il se propage le long de celles-ci. Lors d'une fermeture brusque de la vanne électromagnétique 3, l'arrêt du liquide dans la canalisation rigide provoque une onde de choc, et le bruit de l'onde de choc se propage également le long des canalisations.

La présente invention vise à éliminer, ou du moins à atténuer fortement les inconvénients ci-dessus, par un agencement d'ensemble différent du dispositif d'alimentation.

A cet effet, l'invention a pour objet un dispositif d'alimentation en liquide, avec réducteur de bruits et de coups de bélier, prévu pour relier un appareil utilisateur de liquide à un réseau d'alimentation en liquide, le dispositif étant du genre comprenant une vanne électromagnétique ou une vanne électromagnétique de sécurité, raccordée à une arrivée d'eau du réseau, la vanne étant reliée par l'intermédiaire d'un tuyau d'alimentation souple à l'appareil, et comprenant encore un régulateur de débit, ce dispositif étant caractérisé en ce que le régulateur de débit est disposé en aval de la vanne électromagnétique, à distance de cette vanne, avec interposition d'une longueur de tuyau d'alimentation souple.

Grâce à l'implantation du régulateur de débit en aval de la vanne électromagnétique, notamment à l'extrémité du tuyau d'alimentation souple éloignée de la vanne, les bruits engendrés par les phénomènes de cavitation dans ce régulateur et l'intensité des coups de bélier peuvent être considérablement diminués. En effet, la position retenue par l'invention pour le régulateur de débit déporte le siège des phénomènes de cavitation ; les bruits engendrés par ceux-ci sont amortis par le tuyau d'alimentation souple et ils ne se propagent donc plus le long des conduites du réseau d'alimentation en eau. L'intensité du coup de bélier, apparaissant à la fermeture de la vanne électromagnétique, se trouve elle aussi diminuée, pour des raisons similaires : lors de la fermeture de la vanne, l'onde de choc provoque une légère dilatation du tuyau d'alimentation souple, et l'augmentation de volume dudit tuyau permet de dissiper une partie de l'énergie due à l'onde de choc, d'où une diminution de son intensité.

Le régulateur de débit, implanté en aval de la vanne électromagnétique, assure principalement la fonction de régulation du débit nécessaire au fonctionnement de l'appareil électro-ménager, selon un principe connu. Ce régulateur de débit peut inclure, outre les organes formant le régulateur de débit proprement dit, une tuyère délimitant une chambre de détente et permettant de réduire le bruit.

Dans le cas de l'application préférentielle de l'invention à l'alimentation en eau d'un appareil électro-ménager, tel que lave-vaisselle ou lave-linge, le régulateur de débit peut être notamment mis en place à l'entrée de la boîte à lessive de l'appareil électro-ménager, ou être intégré à la boîte à lessive de cet appareil électro-ménager.

L'invention a aussi pour objet, en tant que tel, un appareil électro-ménager tel que lave-vaisselle ou lave-linge, comportant un dispositif d'alimentation en eau avec réducteur de bruits et de coups de bélier tel que défini ci-dessus.

De toute façon, l'invention sera mieux comprise à l'aide de la description qui suit, en référence au dessin schématique annexé représentant, à titre d'exemple non limitatif, une forme d'exécution de ce dispositif d'alimentation en liquide, avec réducteur de bruits et de coups de bélier :
Figure 2 est une vue d'ensemble, très schématique, d'un dispositif conforme à la présente invention, appliqué à l'alimentation en eau d'un appareil électro-ménager ;
Figure 3 est une vue en coupe, montrant le détail du régulateur de débit appartenant au dispositif de la figure 2.

La figure 2 est un schéma de principe du dispositif selon l'invention, utilisant les mêmes repères numériques que la figure 1 et permettant ainsi une comparaison aisée de l'invention avec la technique antérieure.

Le dispositif comprend toujours une vanne électromagnétique 3, ou une vanne électromagnétique de sécurité, directement raccordée à une arrivée d'eau 4 d'un réseau d'alimentation 1, et reliée par l'intermédiaire d'un tuyau d'alimentation souple 5 à un appareil électro-ménager 2, tel que lave-vaisselle ou lave-linge. Selon l'invention, un régulateur de débit 6 est disposé en aval de la vanne électromagnétique 3, vers l'extrémité du tuyau d'alimentation souple 5 et a proximité de l'appareil électro-ménager 2. Ainsi, la longueur L de tuyau d'alimentation souple 5 présente entre la vanne 3 et le régulateur de débit 6 assure l'amortissement des bruits engendrés par les phénomènes de cavitation, eux-mêmes induits par le passage de l'eau dans le régulateur de débit 6. De plus, le tuyau d'alimentation souple 5 absorbe partiellement l'onde de choc émise à la fermeture de la vanne électromagnétique 3, d'où une réduction de l'intensité des coups de bélier.

La figure 3 montre la structure du régulateur de débit 6 appartenant au dispositif selon l'invention, dans une forme de réalisation particulière. Le régulateur de débit 6 comprend un corps central annulaire 7, une première pièce d'extrémité 8 pourvue d'un embout 9 d'entrée d'eau raccordé à l'extrémité du tuyau d'alimentation souple 5 éloignée de la vanne 3, et une seconde pièce d'extrémité 10 pourvue d'un embout 11 de sortie d'eau, raccordé à l'entrée de l'appareil électro-ménager.

A l'intérieur du corps central 7 sont disposés les organes formant le régulateur de débit proprement dit, dont le rôle est d'assurer un débit d'eau sensiblement constant pour une pression qui varie, par exemple, de 1 à 10 bars. Le régulateur de débit proprement dit comprend une pièce circulaire 12, par exemple en matière plastique, percée d'ouvertures 13 pour le passage de l'eau. La face de la pièce circulaire 12 tournée vers l'amont est munie de petits tétons 14, disposés selon un cercle, sur lesquels vient reposer une garniture en caoutchouc ou similaire 15, en forme de rondelle, retenue sur un ergot central 16 de la pièce circulaire 12. Le débit est établi par les sections de passage comprises entre les tétons 14 et la garniture en caoutchouc 15, dont la position est variable en fonction de la pression d'eau. Ainsi, lorsque la pression d'eau croît, le débit augmente jusqu'au moment où la garniture 15, s'écrasant sur les tétons 14, réduit les sections de passage. La variation de ces sections en fonction de la pression permet d'obtenir la régulation de débit.

Dans l'exemple illustré par la figure 3, le régulateur de débit 6 comporte en outre une tuyère 17, disposée à l'intérieur du corps central 7 en aval de la pièce circulaire 12 du régulateur de débit proprement dit. La tuyère 17 est constituée essentiellement par une pièce à symétrie de révolution, par exemple en matière plastique, présentant un trou central 18 calibré en fonction du débit désiré. La tuyère 17 délimite aussi, autour de son trou central 18, une chambre de détente annulaire 19. Le rôle de la chambre de détente 19 est de faire chuter la pression et la vitesse de l'eau, donc de réduire le bruit, son fonctionnement pouvant être comparé à celui d'un pot d'échappement.

Comme il va de soi, l'invention ne se limite pas à la seule forme d'exécution de ce dispositif d'alimentation en liquide, avec réducteur de bruits et de coups de bélier, qui a été décrite ci-dessus à titre d'exemple ; elle en embrasse, au contraire, toutes les variantes de réalisation et d'application couvertes par les revendications. C'est ainsi, notamment, que l'on ne s'éloignerait pas du cadre défini par les revendications:
- par des modifications de structure du régulateur de débit 6, conservant ses fonctions mais permettant de l'adapter aux besoins spécifiques des appareils à alimenter ;
- éventuellement, par une suppression de la tuyère 17 de ce régulateur, dont la présence n'est pas absolument obligatoire ;
- par un montage différent du régulateur de débit 6, en conservant son implantation en aval de la vanne 3, par exemple : logement de ce régulateur directement à l'intérieur du tuyau d'alimentation souple 5, ou mise en place dudit régulateur à l'entrée de la boîte à lessive de l'appareil électroménager 2, ou encore intégration de ce régulateur à la boîte à lessive ;
- en destinant le dispositif à l'alimentation de machines ou d'installations autres que des appareils électro-ménagers, utilisant de l'eau ou tout autre liquide.

## Revendications

1. Dispositif d'alimentation en liquide, avec réducteur de bruits et de coups de bélier, prévu pour relier un appareil (2) utilisateur de liquide à un réseau d'alimentation en liquide (1), le dispositif étant du genre comprenant une vanne électromagnétique (3) ou une vanne électromagnétique de sécurité, raccordée à une arrivée d'eau (4) du réseau (1), la vanne (3) étant reliée par l'intermédiaire d'un tuyau d'alimentation souple (5) à l'appareil (2), et comprenant encore un régulateur de débit (6), caractérisé en ce que le régulateur de débit (6) est disposé en aval de la vanne électromagnétique (3), à distance de cette vanne, avec interposition d'une longueur (L) de tuyau d'alimentation souple (5).

2. Dispositif d'alimentation en liquide, avec réducteur de bruits et de coups de bélier, selon la revendication 1, caractérisé en ce que le régulateur de débit (6) est raccordé à l'extrémité du tuyau d'alimentation souple (5) éloignée de la vanne (3).

3. Dispositif d'alimentation en liquide, avec réducteur de bruits et de coups de bélier, selon la revendication 1, caractérisé en ce que le régulateur de débit (6) est logé directement à l'intérieur du tuyau d'alimentation souple (5).

4. Dispositif d'alimentation en liquide, avec réducteur de bruits et de coups de bélier, selon l'une quelconque des revendications 1 à 3, caractérise en ce que le régulateur de débit (6) inclut, outre les organes formant le régulateur de débit proprement dit (12 à 16), une tuyère (17) délimitant une chambre de détente (19).

5. Dispositif d'alimentation en liquide, avec réducteur de bruits et de coups de bélier selon l'une quelconque des revendications 1 à 4, caractérisé en ce que l'appareil utilisateur de liquide est un appareil électroménager (2), tel que lave-vaisselle ou lave-linge.

6. Dispositif d'alimentation en eau pour appareil électro-ménager selon la revendication 5, caractérisé en ce que le régulateur de débit (6) est mis en place à l'entrée de la boîte à lessive de l'appareil électro-ménager (2).

7. Dispositif d'alimentation en eau pour appareil électro-ménager selon la revendication 5, caractérisé en ce que le régulateur de débit (6) est intégré à la boîte à lessive de l'appareil électro-ménager (2).

8. Appareil électro-ménager (2), tel que lave-vaisselle ou lave-linge, comportant un dispositif d'alimentation en eau avec réducteur de bruits et de coups de bélier selon l'une quelconque des revendications 1 à 7.

## Claims

1. Liquid-supply device, with a noise and water-hammer attenuator, designed to connect liquid-using equipment (2) to a liquid-supply system (1), the device being of the type comprising an electromagnetic valve (3) or an electromagnetic safety valve, connected to a water inlet (4) from the system (1), the valve (3) being connected to the equipment (2) by means of a flexible supply hose (5), and also comprising a flow regulator (6), characterised in that the flow regulator (6) is disposed downstream of the electromagnetic valve (3), at a distance from this valve, with the interposing of a length (L) of flexible supply hose (5).

2. Liquid-supply device, with a noise and water-hammer attenuator, according to Claim 1, characterised in that the flow regulator (6) is connected to the end of the flexible supply hose (5) remote from the valve (3).

3. Liquid-supply device, with a noise and water-hammer attenuator, according to Claim 1, characterised in that the flow regulator (6) is housed directly inside the flexible supply hose (5).

4. Liquid-supply device, with a noise and water-hammer attenuator, according to any one of Claims 1 to 3, characterised in that the flow regulator (6) includes, in addition to the components forming the flow regulator proper (12 to 16), a nozzle (17) defining an expansion chamber (19).

5. Liquid-supply device, with a noise and water-hammer attenuator, according to any one of Claims 1 to 4, characterised in that the liquid-using equipment is an item of domestic electric equipment (2) such as a dishwasher or washing machine.

6. Water-supply device for domestic electric equipment according to Claim 5, characterised in that the flow regulator (6) is fitted at the inlet to the detergent container of the domestic electric equipment (2).

7. Water-supply device for domestic electric equipment according to Claim 5, characterised in that the flow regulator (6) is integrated into the detergent container of the domestic electric equipment (2).

8. Domestic electric equipment (2), such as a dishwasher or washing machine, including a water-supply device with a noise and water-hammer attenuator according to any one of Claims 1 to 7.

## Patentansprüche

1. Vorrichtung zur Flüssigkeitsversorgung mit einer Einrichtung zum Dämpfen des Schalls und von Flüssigkeitsschlägen, vorgesehen zum Anschluß eines Flüssigkeitsverbrauchers (2) an eine Flüssigkeitsquelle (1), wobei die Vorrichtung ein Elektromagnetventil (3) oder ein elektromagnetisches Sicherheitsventil aufweist, das an eine Wasserleitung (4) der Quelle (1) angeschlossen ist, und wobei das Ventil (3) über einen Schlauch oder über ein biegsames Rohr (5) an den Verbraucher (2) angeschlossen ist und eine Einstellvorrichtung für die abzugebene Menge aufweist,
**dadurch gekennzeichnet,**
daß die Einstellvorrichtung (6) stromab des Elektromagnetventils (3) angeordnet ist, und zwar beabstandet vom Ventil unter Einfügung einer bestimmten Länge (L) des Schlauchs bzw. des biegsamen Rohrs (5).

2. Vorrichtung nach Anspruch 1,
**dadurch gekennzeichnet,**
daß die Einstellvorrichtung (6) an dasjenige Ende des Schlauchs oder Rohres (5) angeschlossen ist, das vom Ventil (3) entfernt angeordnet ist.

3. Vorrichtung nach Anspruch 1,
**dadurch gekennzeichnet,**
daß die Einstellvorrichtung (6) sich direkt im Inneren des Schlauches oder Rohres (5) befindet.

4. Vorrichtung nach einem der Patentansprüche 1 - 3,
**dadurch gekennzeichnet,**
daß die Einstellvorrichtung (6) zusätzlich zu denjenigen Bauteilen (12 - 16), die der eigentlichen Einstellung dienen, eine Düse (17) aufweist, die eine Entspannungskammer (19) begrenzt.

5. Vorrichtung nach einem der Patentansprüche 1 - 4,
**dadurch gekennzeichnet,**
daß der Flüssigkeitsverbraucher ein elektrisches Haushaltsgerät (2) ist, beispielsweise ein Geschirrspüler oder eine Waschmaschine.

6. Vorrichtung nach Anspruch 5,
**dadurch gekennzeichnet,**
daß die Einstellvorrichtung (6) am Eingang der Waschkammer des elektrischen Haushaltsgeräts (2) angeordnet ist.

7. Vorrichtung nach Anspruch 5,
**dadurch gekennzeichnet,**
daß die Einstellvorrichtung (6) in die Waschkammer des elektrischen Haushaltsgeräts (2) integriert ist.

8. Elektrisches Haushaltsgerät (2), beispielsweise Geschirrspüler oder Waschmaschine, versehen mit einer Wasserversorgung mit einer Einrichtung zum Dämpfen des Schalls und von Flüssigkeitsschlägen nach einem der Patentansprüche 1 - 7.
